# EUROPEAN PATENT APPLICATION

(11) **EP 4 351 241 A1**
(43) Date of publication of application: **10.04.2024**
(21) Application number: 21944056.7
(22) Date of filing: 31.05.2021
(51) Int. Cl.: H04W 72/04, H04W 28/18

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); MATSUMURA, Yuki, Tokyo 100-6150 (JP); SHIBAIKE, Naoya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/020734
(87) International publication number: WO 2022/254548

(57) **Abstract**

A terminal according to one aspect of the present disclosure includes: a control section that performs control to determine different modulation and coding schemes (MCSs) for a plurality of layers; and a receiving section that applies the different MCSs to receive downlink shared channels of the plurality of layers. According to one aspect of the present disclosure, it is possible to appropriately perform power/MCS control per layer/port.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15/16 NR, control is performed on transmission and/or reception of a channel/signal using a plurality of antenna ports to have equal power between the antenna ports and to have equal power / the same modulation and coding scheme (MCS) between layers.

However, for further future radio communication systems (such as 6G), it is desired to achieve communication further increased in speed in Multi Input Multi Output (MIMO) environment. However, studies have not yet advanced how to achieve such high-speed communication. Unless this is made clear, an increase in communication throughput may be suppressed.

Thus, an object of the present disclosure is to provide a terminal, a radio communication method, and a base station that can appropriately perform power/MCS control per layer/port.

### Solution to Problem

A terminal according to one aspect of the present disclosure includes: a control section that performs control to determine different modulation and coding schemes (MCSs) for a plurality of layers; and a receiving section that applies the different MCSs to receive downlink shared channels of the plurality of layers.

### Advantageous Effects of Invention

According to one aspect of the present disclosure, it is possible to appropriately perform power/MCS control per layer/port.

### Brief Description of Drawings

[FIG. 1] FIGS. 1A and 1B are diagrams to show examples of TPMI notification to a UE configured with transform precoding being disabled and maximum rank = 2 and configured to perform transmission for two antenna ports.
[FIG. 2] FIG. 2 is a diagram to show an example of correspondence between a TPMI index and a precoding matrix W.
[FIG. 3] FIG. 3 shows a conceptual diagram of a first embodiment.
[FIG. 4] FIGS. 4A and 4B are diagrams to show examples of TPMI notification to a UE configured with transform precoding being disabled and maximum rank = 2 and configured to perform transmission for two antenna ports, in Embodiment 1.1.1.
[FIG. 5] FIG. 5 is a diagram to show an example of correspondence between a TPMI index and a precoding matrix W in Embodiment 1.1.2.
[FIG. 6] FIGS. 6A and 6B are diagrams to show examples of correspondence between a certain index and a power distribution matrix R in Embodiment 1.1.3.
[FIG. 7] FIG. 7 is a diagram to show an example of an RRC information element / parameter for configuring a power ratio according to Embodiment 1.2.
[FIG. 8] FIG. 8 is a diagram to show an example of application of a power ratio to non-codebook based transmission in the first embodiment.
[FIG. 9] FIG. 9 shows a conceptual diagram of a second embodiment.
[FIG. 10] FIGS. 10A and 10B are diagrams to show examples of determination of an MCS per layer based on an MCS field in Embodiment 2.1.
[FIG. 11] FIGS. 11A and 11B are diagrams to show examples of determination of MCSs for a plurality of layers according to Embodiment 2.1.
[FIG. 12] FIG. 12 is a diagram to show an example of an MCS table in which MCSs for a plurality of layers correspond to one MCS index value.
[FIG. 13] FIG. 13 is a diagram to show an example of an RRC information element / parameter for configuring an MCS per layer according to Embodiment 2.2.
[FIG. 14] FIG. 14 is a diagram to show an example of determination of a power ratio and an MCS per layer based on a specific field in variations of the first embodiment and the second embodiment.
[FIG. 15] FIG. 15 is a diagram to show an example of power control per PUSCH for MTRP PUSCHs based on another variation of the first embodiment.
[FIG. 16] FIG. 16 is a diagram to show an example of MCS control per PUSCH for MTRP PUSCHs based on another variation of the second embodiment.
[FIG. 17] FIG. 17 shows a conceptual diagram of a third embodiment.
[FIG. 18] FIGS. 18A and 18B are diagrams to show examples of a CSI report including a CQI per layer in a fourth embodiment.
[FIG. 19] FIGS. 19A and 19B are diagrams to show examples of the determination of MCSs for a plurality of layers according to Embodiment 2.1.
[FIG. 20] FIG. 20 is a diagram to show an example of MCS control per PDSCH for MTRP PDSCHs based on another variation of the third embodiment.
[FIG. 21] FIG. 21 is a diagram to show an example of a schematic structure of a radio communication system according to one embodiment.
[FIG. 22] FIG. 22 is a diagram to show an example of a structure of a base station according to one embodiment.
[FIG. 23] FIG. 23 is a diagram to show an example of a structure of a user terminal according to one embodiment.
[FIG. 24] FIG. 24 is a diagram to show an example of a hardware structure of the base station and the user terminal according to one embodiment.

### Description of Embodiments

### (PUSCH Precoder)

In NR, a user terminal (User Equipment (UE)) may support at least one of codebook (CB) based transmission and a non-codebook (NCB) based transmission.

For example, the UE may judge a precoder (precoding matrix) for at least one of CB based and NCB based uplink shared channel (Physical Uplink Shared Channel (PUSCH)) transmission by using a reference signal for a measurement (Sounding Reference Signal (SRS)) resource index (SRS Resource Index (SRI)).

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by precoding information and number of layers field ("Precoding information and number of layers" field) of the DCI. Note that, for simplicity, the "precoding information and number of layers field" is also referred to simply as a "precoding field" below.

Note that the maximum number of layers (maximum rank) of UL transmission may be configured for the UE by an RRC parameter "maxRank."

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence") .

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of the codebook specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

Specifically, in Rel-15/16 NR, when non-codebook based transmission is used for a PUSCH, the UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

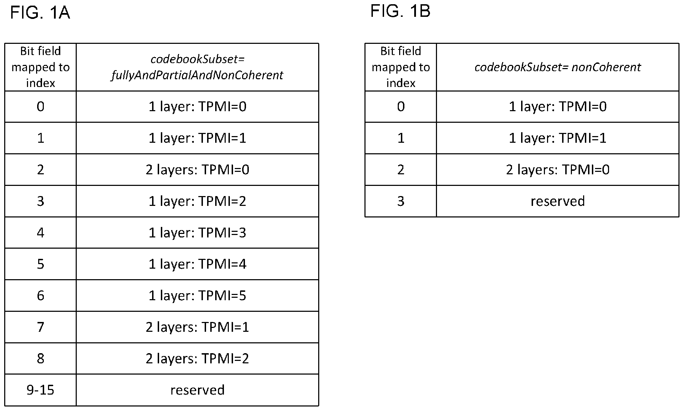

FIGS. 1A and 1B are diagrams to show examples of TPMI notification to a UE configured with transform precoding being disabled and maximum rank = 2 and configured to perform transmission for two antenna ports.

Note that the transform precoding being enabled may mean using Discrete Fourier Transform spread OFDM (DFT-s-OFDM), and the transform precoding being disabled may mean using CP-OFDM.

In the present example, shown is a relationship (table) between a precoding field (indicated as "bit field mapped to index" in the drawings, this applies also to subsequent similar drawings) of DCI and a TPMI (TPMI index) in Rel-15 NR. Note that a table in FIG. 1A with a description of "codebookSubset = fullyAndPartialAndNonCoherent" indicates that this is a table referred by a full coherent UE, and a table in FIG. 1B with a description of "codebookSubset = nonCoherent" indicates that this is a table referred by a non-coherent UE.

The UE determines the number of layers to be applied to transmission and a TPMI for a precoding matrix, based on the value in the precoding field included in the DCI and the table in FIG. 1A/1B. For example, the full coherent UE specified with a precoding field = 2 determines that the number of layers = 2 and TPMI = 0 are used for PUSCH transmission, based on FIG. 1A. Note that "reserved" corresponds to a value planned to be defined in the future.

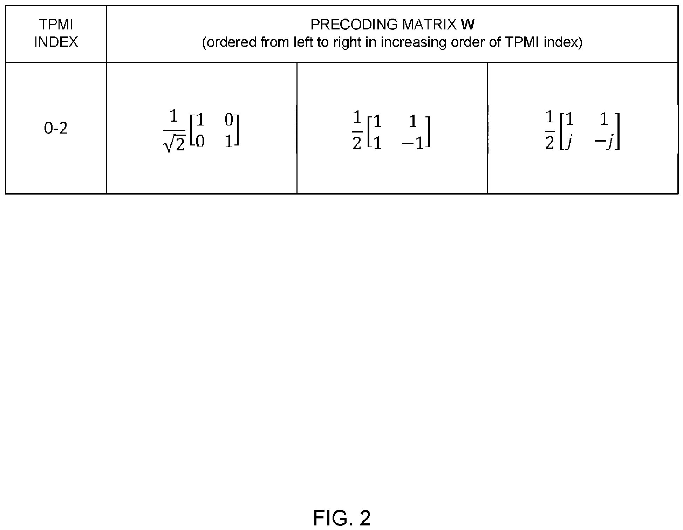

FIG. 2 is a diagram to show an example of correspondence between a TPMI index and a precoding matrix W. FIG. 2 shows the precoding matrix W for two-layer transmission using two antenna ports with transform precoding being disabled.

The UE determined to use the number of layers = 2 and TPMI = 0 for the PUSCH transmission according to FIG. 1A applies W corresponding to TPMI = 0 in FIG. 2 to the PUSCH transmission.

Note that the UE may calculate a block Z of vectors of complex number symbols for respective antenna ports to be mapped to a resource (for example, a resource element), based on W and a block Y of vectors of complex number symbols for respective layers after transform precoding (or after layer mapping). For example, this may be obtained according to Z = WY.

In existing specifications of Rel-15/16 NR, it is defined that W is specified by the TPMI indicated by the precoding field as described above for codebook based transmission, while W is an identity matrix for non-codebook based transmission.

For W in FIG. 2, the power of layer 1 (first column vector) and the power of layer 2 (second column vector) are the same. For example, for TPMI = 0, the sum of squares of the components of a column vector of layer 1 and the sum of squares of the components of a column vector of layer 2 are each 1/2 (= (1/√2)^2), and hence the power ratio between layer 1 and layer 2 is 1:1.

As described above, in existing Rel-15/16 NR, control is performed on transmission of a channel/signal using a plurality of antenna ports to have equal power between the antenna ports and to have equal power / the same modulation and coding scheme (MCS) between layers.

Note that similar control is applied not only to uplink transmission (for example, a PUSCH) but also downlink transmission (for example, a Physical Downlink Shared Channel (PDSCH)).

However, for further future radio communication systems (such as 6G), it is desired to achieve communication further increased in speed in Multi Input Multi Output (MIMO) environment. However, studies have not yet advanced how to achieve such high-speed communication. Unless this is made clear, an increase in communication throughput may be suppressed.

Thus, the inventors of the present invention came up with the idea of a method for appropriately performing power/MCS control per layer/port. With this method, it is possible to perform appropriate power allocation per transmission path (layer) based on the water filling principle or the like, and hence an increase in communication path capacity can be expected.

Embodiments according to the present disclosure will be described in detail with reference to the drawings as follows. The radio communication methods according to respective embodiments may each be employed individually, or may be employed in combination.

Note that in the present disclosure, "A/B" may mean "at least one of A and B."

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

In the present disclosure, activate, deactivate, indicate, select, configure, update, determine, and the like may be interchangeably interpreted.

In the present disclosure, a panel, a beam, a panel group, a beam group, an Uplink (UL) transmission entity, a TRP, spatial relation information (SRI), a spatial relation, a control resource set (CORESET), a Physical Downlink Shared Channel (PDSCH), a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), a certain resource (for example, a certain reference signal resource), a certain resource set (for example, a certain reference signal resource set), a CORESET pool, a PUCCH group (PUCCH resource group), a spatial relation group, a downlink Transmission Configuration Indication state (TCI state) (DL TCI state), an uplink TCI state (UL TCI state), a unified TCI state, QCL, and the like may be interchangeably interpreted.

A spatial relation information Identifier (ID) (TCI state ID) and spatial relation information (TCI state) may be interchangeably interpreted. "Spatial relation information" may be interpreted as a "set of pieces of spatial relation information (set of spatial relation information)," "one or a plurality of pieces of spatial relation information (one or a plurality of spatial relation information)," and the like. A TCI state and TCI may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the following description of embodiments, "spatial relation information (SRI)," "spatial relation information for PUSCH," a "spatial relation," a "UL beam," a "UE transmit beam," "UL TCI," a "UL TCI state," a "spatial relation of a UL TCI state," an SRS resource indicator (SRI), an SRS resource, a precoder, and the like may be interchangeably interpreted.

In the present disclosure, a layer, a port (antenna port), an SRS port, a DMRS port, and the like may be interchangeably interpreted. For example, the power ratio between layers may be interpreted as a power ratio between ports.

A layer may be interpreted as a group of one or more layers (layer group), a group of one of more of the ports (port group), and the like, and vice versa. For example, layers 1, 2, and 3 may be handled so that layers 1 and 2 belong to layer group 1 and layer 3 belongs to layer group 2.

Note that "layer i" (i is an integer) in the present disclosure may be interpreted as layer i - 1, may be interpreted as layer i + 1, or may be interpreted as any other layer number (in other words, may be interpreted as any layer number).

A "PUSCH" in the embodiments below may be interpreted as another UL channel / UL signal (for example, a PUCCH, a DMRS, or an SRS).

A "PDSCH" in the embodiments below may be interpreted as another DL channel / DL signal (for example, a PDCCH, a DMRS, or a CSI-RS).

"Power" in the embodiments below may be interpreted as transmission power and vice versa and may mean PUSCH transmission power, PDSCH transmission power, and the like. In the present disclosure, power may be interpreted as at least one of an absolute value of precoding vector/matrix, the sum of squares of all the elements of a specific column (or row) of the vector/matrix, the sum of squares of all the elements of the vector/matrix, and the like.

### (Radio Communication Method)

### <First Embodiment>

A first embodiment relates to power control of a PUSCH per layer.

In the first embodiment, a UE may transmit a PUSCH by using a different power for each layer.

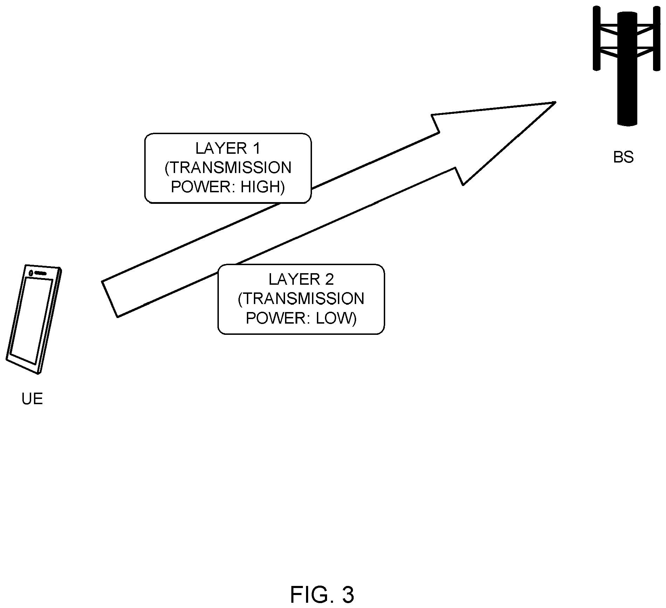

FIG. 3 shows a conceptual diagram of the first embodiment. As described above, the UE equipartitions power between layers in Rel-15/16 NR. However, in the first embodiment, the UE can transmit layer 1 at a high transmission power while transmitting layer 2 at a low transmission power, as shown in the drawing.

When at least one of the following conditions is satisfied, the UE may judge that determination of a PUSCH power per layer is performed (can be performed):
- condition 1-1: the UE reports that power control of a PUSCH per layer is possible (or is supported),
- condition 1-2: the UE is configured with a specific higher layer parameter,
- condition 1-3: the UE receives a specific MAC CE,
- condition 1-4: the number of layers of the PUSCH is a certain value / is included in a certain range, and
- condition 1-5: an MCS per layer is indicated for the PUSCH.

The report in condition 1-1 may be a report of UE capability information indicating support of power control of a PUSCH per layer.

The higher layer parameter in condition 1-2 may be a parameter indicating that power control of a PUSCH per layer is enabled. This parameter may be a parameter included in PUSCH configuration information (for example, a PUSCH-config information element). This parameter may be a parameter for full power transmission power (for example, ul-FullPowerTransmission), for example.

The MAC CE in condition 1-3 may be a MAC CE indicating that power control of a PUSCH per layer is activated/deactivated. When power control of a PUSCH per layer is activated, the UE may perform power control of a PUSCH per layer. When power control of a PUSCH per layer is deactivated, the UE need not perform power control of a PUSCH per layer (in this case, the UE may perform layer-common power control of a PUSCH as that defined in Rel-15/16 NR).

The "certain value" in condition 1-4 may be 1, 2, 4, 8, or the like, for example. "Included in a certain range" in condition 1-4 may mean "being equal to or larger than / larger than a threshold," "being equal to or smaller than / smaller than a threshold," or the like.

A "certain value," a "certain range" (for example, the above-described threshold), and the like in condition 1-4 may be defined in a specification in advance, may be specified based on higher layer signaling (for example, an RRC parameter, a MAC CE) or physical layer signaling (for example, DCI), or a combination of these, or may be determined based on UE capability.

Condition 1-5 may be assumed to be satisfied when a plurality of MCS fields indicating MCSs of respective different layers are included or when one MCS field indicating a plurality of MCSs for a plurality of respective layers is included, in DCI for scheduling a PUSCH, for example.

The first embodiment is divided broadly into two below depending on how the UE determines PUSCH transmission power per layer:
- Embodiment 1.1: the UE determines PUSCH transmission power per layer based on DCI and
- Embodiment 1.2: the UE determines PUSCH transmission power per layer based on an RRC parameter.

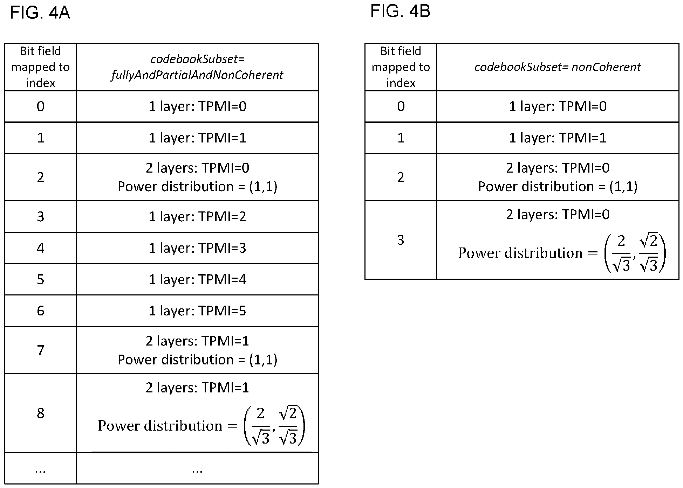

Note that Embodiment 1.1 and Embodiment 1.2 may be applied when at least one of conditions 1-1 to 1-5 above is satisfied. For example, the table in FIG. 4A/4B in Embodiment 1.1.1 to be described below may be referred by the UE only when at least one of conditions 1-1 to 1-5 above is satisfied. For example, the UE may assume that a power ratio field in Embodiment 1.1.3 to be described below is included in DCI only when at least one of conditions 1-1 to 1-5 above is satisfied.

In the present disclosure, an example in which power per layer is determined based on a power ration between layers is described in the following embodiments. However, the power ratio may be interpreted as a transmission power value of each layer. In this case, one of the transmission power values of the respective layers may be provided to the UE to determine a transmission power value(s) of another layer(s), based on this.

The power ratio between layers may be given as power ratio = (1, 1) (this may mean power of layer 1 (power coefficient) : power of layer 2 = 1:1, this similarly applies below) or may be given as a diagonal matrix having the value of a power ratio per layer as diagonal components (diagonal elements) (for example, a diagonal component of i-th row and i-th column indicates power (power coefficient) of layer 1). This diagonal matrix is also referred to as a power distribution matrix R (matrix representing power per layer) below.

Note that the power distribution matrix R may be derived from the power ratio between layers given as power ratio = (1, 1), or a power ratio between layers may be derived from R conversely. In the embodiments below, the power ratio and the power distribution matrix R may be interchangeably interpreted.

### {Embodiment 1.1}

The UE may determine power per layer, based on a field included in DCI.

For example, the UE may judge a power ratio between layers or a transmission power value for each layer, based on any of or a combination of the precoding information and number of layers field ("Precoding information and number of layers" field) (for simplicity, also referred to as a precoding field below), an SRI field, and the like.

Embodiment 1.1 is further divided broadly into Embodiments 1.1.1 to 1.1.3.

### {{Embodiment 1.1.1}}

In Embodiment 1.1.1, the UE determines a TPMI and a power ratio, based on a value in the precoding field. In other words, in Embodiment 1.1.1, at least one codepoint in the precoding field is associated with a power ratio.

In Embodiment 1.1.1, the UE may calculate Z described above, based on the precoding matrix W corresponding to the TPMI, Y described above, and the power distribution matrix R. For example, this may be obtained according to Z = WRY.

FIGS. 4A and 4B are diagrams to show examples of TPMI notification to the UE configured with transform precoding being disabled and maximum rank = 2 and configured to perform transmission for two antenna ports, in Embodiment 1.1.1. In the present example, description is not repeated for similar respects to those in FIGS. 1A and 1B.

In the present example, when the number of layers associated with a codepoint (value) in the precoding field is two or more, the power ratio between layers in addition to the number of layers and the TPMI is also associated with the codepoint. For example, in FIG. 4A, codepoint = 2 indicates power ratio = (1, 1), and codepoint = 8 indicates power ratio = (2/√3, √/2/√3).

For different TPMIs of the same number of layers (codepoint = 2 and 7 in FIG. 4A), the same/different power ratio(s) may be possible to be specified, or TPMIs of the same number of layers (codepoint = 7 and 8 in FIG. 4A), the same/different power ratio(s) may be possible to be specified.

In Embodiment 1.1.1, the number of bits of the precoding field may vary based on whether power control per layer is performed. In other words, the UE may assume that the number of bits of the precoding field when power control per layer is performed and the number of bits of the precoding field when power control per layer is not performed are different from each other, or may assume that the numbers are the same.

Note that each power ratio associated with the codepoint may be defined in a specification in advance or may be specified/determined by higher layer signaling, physical layer signaling, or UE capability, or a combination of these.

### {{Embodiment 1.1.2}}

Embodiment 1.1.2 is similar to an existing standard in that the UE determines a TPMI, based on a value in the precoding field. However, Embodiment 1.1.2 is different from the existing standard in that W corresponding to a TPMI includes W adjusted so that the power ratio per layer is different.

In Embodiment 1.1.2, the UE may calculate Z described above, based on the precoding matrix W corresponding to the TPMI (taking into account of the power ratio between layers) and Y described above. For example, this may be obtained according to Z = WY.

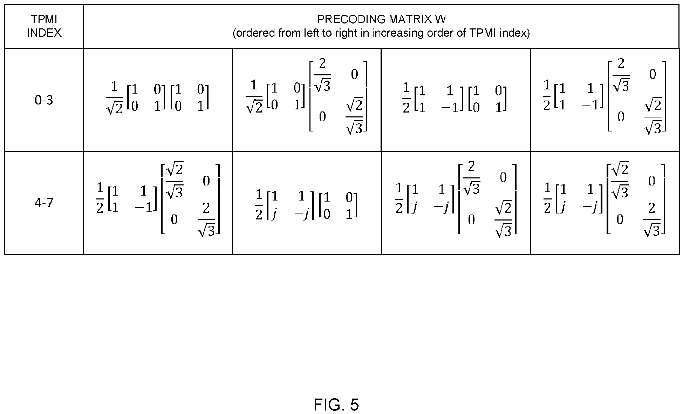

FIG. 5 is a diagram to show an example of correspondence between a TPMI index and the precoding matrix W in Embodiment 1.1.2. FIG. 5, as FIG. 2, shows the precoding matrix W for two-layer transmission using two antenna ports with transform precoding being disabled and corresponds to an example expressed as, when W having the same power ratio between layers in FIG. 2 is supposed to be W_{TPMI}, W = W_{TPMI}R by the power distribution matrix R.

Note that, in the present disclosure, an example of R where the sum of squares of all the components of WR or W_{TPMI}R is equal to or smaller than 1 (or smaller than 1) is described. However, R for which the sum of squares exceeds 1 may be permitted.

As shown in FIG. 5, W for which the same/different Rs are multiplied for different W_{TPMI} may be usable, or W for which different Rs are multiplied for the same W_{TPMI} may be usable.

Note that indices not shown in the drawing may simply be omitted (W may be assigned) or may be indicated as Reserved, which similarly applies to other drawings.

In Embodiment 1.1.2, the number of bits of the precoding field may vary based on whether power control per layer is performed. In other words, the UE may assume that the number of bits of the precoding field when power control per layer is performed and the number of bits of the precoding field when power control per layer is not performed are different from each other, or may assume that the numbers are the same.

Note that W corresponding to a TPMI index may be defined in a specification in advance or may be specified/determined by higher layer signaling, physical layer signaling, or UE capability, or a combination of these.

### {{Embodiment 1.1.3}}

In Embodiment 1.1.3, the UE determines a power ratio, based on the value of a specific field of DCI or the value of a specific index indicated by the value of the specific field.

In Embodiment 1.1.3, the UE may calculate Z described above, based on the precoding matrix W corresponding to the TPMI, Y described above, and the power distribution matrix R. For example, this may be obtained according to Z = WRY.

The specific field described above in Embodiment 1.1.3 may be at least one of a precoding field, an SRI field, a time/frequency resource allocation field, and the like, and the specific index may be at least one of a TPMI index, an SRI index (SRI), and the like, for example.

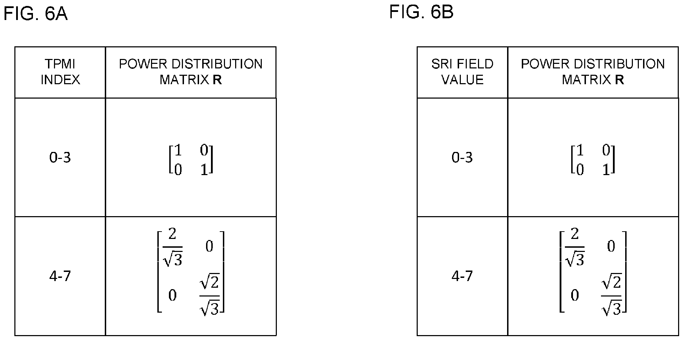

FIGS. 6A and 6B are diagrams to show examples of correspondence between a certain index and the power distribution matrix R in Embodiment 1.1.3. In FIG. 6A, R is associated with a TPMI index derived based on a precoding field. In FIG. 6B, R is associated with the value of an SRI field. Note that R may be determined based on one or a plurality of SRIs corresponding to the value of the SRI field.

The specific field in Embodiment 1.1.3 may be a new field indicating a power ratio between layers (or R) and not defined in existing NR (for example, referred to as a power ratio field).

In Embodiment 1.1.3, the number of bits of the power ratio field may be judged based on at least one of the number of layers, a higher layer parameter, and the like.

Note that each power ratio associated with each codepoint of the power ratio field may be defined in a specification in advance or may be specified/determined by higher layer signaling, physical layer signaling, or UE capability, or a combination of these.

### {Embodiment 1.2}

The UE may determine power per layer, based on an RRC parameter.

In Embodiment 1.2, also as described in the embodiments above, Z described above may be calculated based on Z = WRY or Z = WY = W_{TPMI}RY. This R (or WR or W_{TPMI}R) may be determined based on an RRC parameter.

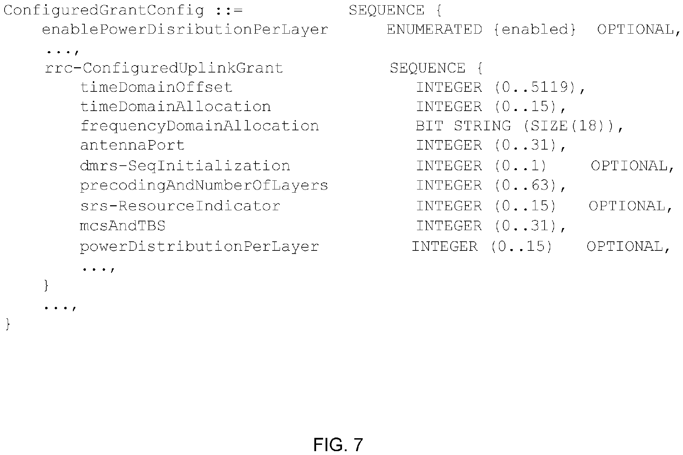

FIG. 7 is a diagram to show an example of an RRC information element / parameter for configuring a power ratio according to Embodiment 1.2. The present example is described by using the Abstract Syntax Notation One (ASN.1) notation (note that, since this is merely an example, the description may not be a complete notation). In this diagram, the meaning of an RRC information element / parameter having the same name as an RRC information element / parameter defined already in a Rel-15/16 NR specification (TS 38.331) is naturally understood by those skilled in the art.

Note that, in the present disclosure, names of an RRC information element, an RRC Parameter, and the like are not limited to these and may be added with a suffix indicating that this is introduced in a specific resource (for example, "_r18," "-r18," or the like), for example. The suffix need not be added, or another word may be added.

In the present example, an RRC information element "ConfiguredGrantConfig" of a configured grant PUSCH is described.

For example, enablePowerDistributionPerLayer may be a parameter that enables power control per layer (when it is enabled, this indicates being possible to perform).

The UE may determine a power ratio of a configured grant PUSCH by using a value given by precodingAndNumberOfLayers in RRC configured UL grant (rrc-ConfiguredUplinkGrant) instead of the precoding field of DCI. The contents described above in Embodiment 1.1.1, Embodiment 1.1.2, and the like may be applied, with change of wording as appropriate.

The UE may determine a power ratio of a configured grant PUSCH by using a value given by powerDistributionPerLayer in RRC configured UL grant (rrc-ConfiguredUplinkGrant) instead of the power ratio field of DCI. The contents described above in Embodiment 1.1.3 may be applied, with change of wording as appropriate. Note that powerDistributionPerLayer may indicate an index associated with a power ration (integer equal to or higher than 0 and equal to or lower than 15 in the drawing) or may indicate an array/resource/sequence including a value related to one or more power ratios (for example, the values of the power ratio of layer 1 and layer 2).

Note that the configuration of the RRC parameter related to a power ratio as that in FIG. 7 is not limited to ConfiguredGrantConfig but may be configured in PUSCH configuration information (PUSCH-Config information element), for example. In this case, each parameter described above may be judged as a parameter for PUSCH control, and, for example, the UE may judge a power ratio for a dynamic PUSCH scheduled by DCI, based on an RRC parameter related to a power ratio included in the PUSCH configuration information.

### {Variation of First Embodiment}

The methods of determining a power ratio of Embodiment 1.1 and Embodiment 1.2 described above may be applied to codebook based transmission or may be applied to non-codebook based transmission.

In non-codebook based transmission, calculation may be performed according to Z = WRY, based on a determined power ratio (power distribution matrix R) with an existing identity matrix as it is being used as W. In non-codebook based transmission, calculation may be performed according to Z = RY with the power distribution matrix R being used as W. For non-codebook based transmission, W in the above-described embodiments may be interpreted as an existing identity matrix or R.

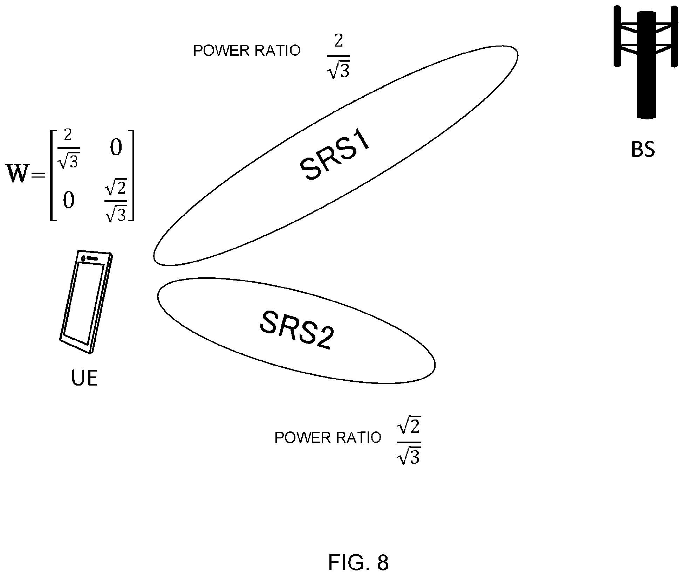

FIG. 8 is a diagram to show an example of application of a power ratio to non-codebook based transmission in the first embodiment. In the present example, it is assumed that the UE configured with non-codebook based transmission is indicated with two SRI indices (SRI1, SRI2) by an SRI field of DCI.

The UE may determine a power ratio, based on the SRI field value (for example, layer (port) 1 : 2 = (2/A/3, √2/√3)) according to Embodiment 1.1.3 and apply the corresponding power ratio to each of the two SRIs indicated by the two SRI indices for transmission.

The UE may assume that any of the method of determining a power ratio of Embodiment 1.1 and Embodiment 1.2 described above is applicable to codebook based transmission.

The UE may assume that a method of determining a power ratio not based on a precoding field (or a TPMI) (for example, a determination method based on Embodiment 1.1.3 or powerDistributionPerLayer of Embodiment 1.2 or the like) is applicable to non-codebook based transmission.

According to the first embodiment described above, it is possible to appropriately perform power control per layer.

### <Second Embodiment>

A second embodiment relates to MCS control of a PUSCH per layer.

In the second embodiment, the UE may apply a different MCS for each layer and transmit a PUSCH. Note that, when the UE applies a different MCS for each layer, the UE may calculate the size of a transport block transmitted on the PUSCH by using these different MCSs (Transport Block Size (TBS)). For example, the UE may calculate, for each layer, a TBS for the layer by using the corresponding MCS. In this case, the total of the TBSs transmitted by using a plurality of layers may be obtained by the sum of the TBSs of the respective layers. This will be described below.

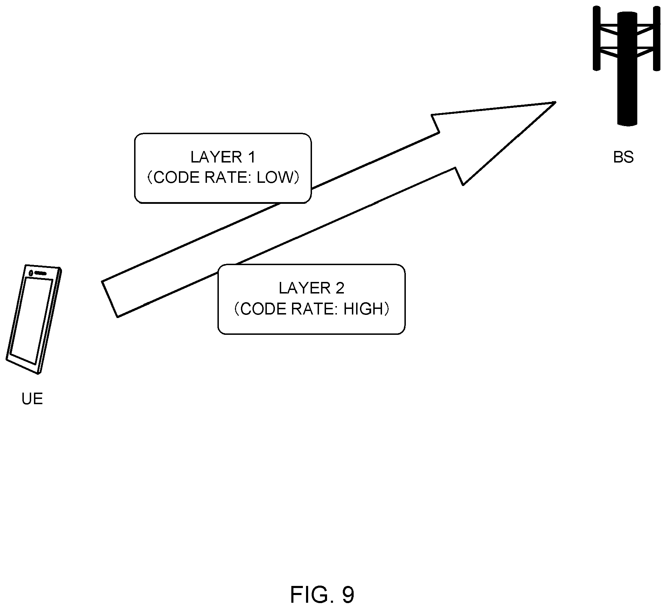

FIG. 9 shows a conceptual diagram of the second embodiment. As described above, the UE applies the same MCS between layers in Rel-15/16 NR. However, in the second embodiment, the UE can transmit layer 1 by using an MCS with a low code rate (for example, MCS index = 0) and can transmit layer 2 by using an MCS with a high code rate (for example, MCS index = 5) as shown in the drawing.

When at least one of the following conditions is satisfied, the UE may judge that determination of an MCS for a PUSCH per layer is performed (can be performed):
- condition 2-1: the UE reports that control of a MCS per layer is possible (or is supported),
- condition 2-2: the UE is configured with a specific higher layer parameter,
- condition 2-3: the UE receives a specific MAC CE,
- condition 2-4: the number of layers of the PUSCH is a certain value / is included in a certain range, and
- condition 2-5: for the PUSCH, a different power is applied for each layer (different power ratio is specified/configured).

The report in condition 2-1 may be a report of UE capability information indicating support of MCS control of a PUSCH per layer.

The higher layer parameter in condition 2-2 may be a parameter indicating that MCS control of a PUSCH per layer is enabled. This parameter may be a parameter included in PUSCH configuration information (for example, a PUSCH-config information element). This parameter may be a parameter for full power transmission power (for example, ul-FullPowerTransmission), for example.

The MAC CE in condition 2-3 may be a MAC CE indicating that MCS control of a PUSCH per layer is activated/deactivated. When MCS control of a PUSCH per layer is activated, the UE may perform MCS control of a PUSCH per layer. When MCS control of a PUSCH per layer is deactivated, the UE need not perform MCS control of a PUSCH per layer (in this case, the UE may perform layer-common MCS control of a PUSCH as that defined in Rel-15/16 NR) .

The "certain value" in condition 2-4 may be 1, 2, 4, 8, or the like, for example. "Included in a certain range" in condition 2-4 may mean "being equal to or larger than / larger than a threshold," "being equal to or smaller than / smaller than a threshold," or the like.

A "certain value," a "certain range" (for example, the above-described threshold), and the like in condition 2-4 may be defined in a specification in advance, may be specified based on higher layer signaling (for example, an RRC parameter, a MAC CE) or physical layer signaling (for example, DCI), or a combination of these, or may be determined based on UE capability.

It may be assumed that condition 2-5 is satisfied when the power ratio described in the first embodiment is specified/configured, for example.

The second embodiment is divided broadly into two below depending on how the UE determines an MCS for a PUSCH per layer:
- Embodiment 2.1: the UE determines an MCS for a PUSCH per layer based on DCI and
- Embodiment 2.2: the UE determines an MCS for a PUSCH per layer based on an RRC parameter.

Note that Embodiment 2.1 and Embodiment 2.2 may be applied when at least one of conditions 2-1 to 2-5 above is satisfied. For example, the MCS table in Embodiment 2.1 to be described below may be referred by the UE only when at least one of conditions 2-1 to 2-5 above is satisfied. For example, the UE may assume that a second MCS field or an MCS offset field in Embodiment 2.1 to be described below is included in DCI only when at least one of conditions 2-1 to 2-5 above is satisfied.

### {Embodiment 2.1}

The UE may determine an MCS per layer, based on a field included in DCI.

For example, the UE may judge an MCS per layer of a plurality of layers, based on one MCS field. This MCS field may be expressed by the same number of bits as that of an existing MCS field (five bits) or may be expressed by a different number (for example, a larger number) of bits. Note that when MCS indices for the plurality of layers are specified by one MCS field, this MCS field may be referred to as an MCS group field and the like.

The UE may determine, based on the MCS index of one layer indicated by the one MCS field, an MCS index for another layer.

The UE may judge, based on a plurality of MCS fields, an MCS for one layer per MCS field of the MCS fields. Each of these MCS fields may be expressed by the same number of bits as that of an existing MCS field (five bits) or may be expressed by a different number (for example, a smaller number) of bits.

In Embodiment 2.1, the number of bits of each MCS field may vary based on at least one of whether MCS control per layer is performed, the number of transmission layers, and the like. For example, the UE may assume that the number of bits of the MCS field when MCS control per layer is performed is different from the number of bits of the MCS field when MCS control per layer is not performed, or may assume that the numbers are the same.

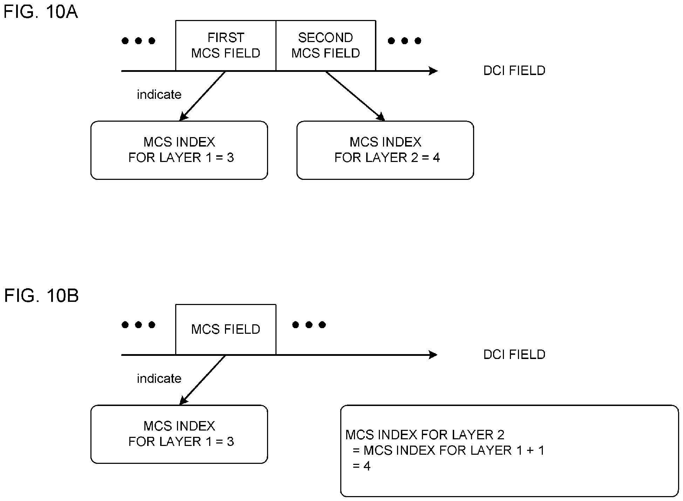

FIGS. 10A and 10B are diagrams to show examples of determination of an MCS per layer based on an MCS field in Embodiment 2.1.

FIG. 10A shows an example in which a plurality of MCS fields included in DCI indicate respective MCSs of different layers. In the present example, a first MCS field indicates an MCS index for layer 1 (= 3), and the second MCS field indicates an MCS index for layer 2 (= 4).

FIG. 10B shows an example in which one MCS field included in DCI indicates an MCS of one layer. In the present example, the one MCS field indicates an MCS index for layer 1 (= 3). The UE may obtain an MCS index for layer 2 as the MCS index for layer 1 + 1 (= 4).

When the UE determines, based on the MCS index of one layer indicated by the one MCS field, an MCS index for another layer, the MCS index for the other layer may be obtained as the MCS index for the other layer = the MCS index for the one layer + MCS offset (MCS offset = 1 in FIG. 10B described above). The MCS offset may be interpreted as an MCS index offset, a differential MCS index, and the like, and vice versa. The MCS offset may be an integer and may take a negative value.

The one MCS field may indicate the MCS index of the layer with the lowest index (for example, layer 1) or the layer with the highest index (for example, layer of the highest rank).

The MCS offset may be defined in a specification in advance or may be specified/determined by higher layer signaling, physical layer signaling, or UE capability, or a combination of these. The MCS offset may be specified by an MCS offset field included in the same DCI as that including the MCS field. The number of bits of the MCS offset field may be judged based on at least one of the number of layers, a higher layer parameter, and the like.

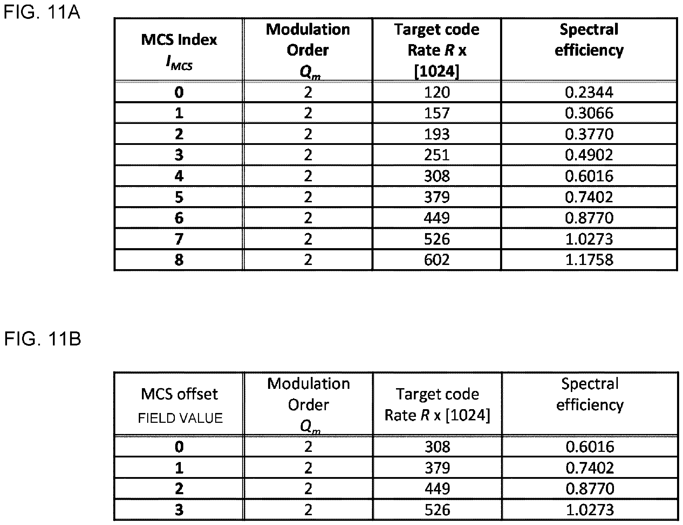

FIGS. 11A and 11B are diagrams to show examples of determination of MCSs for a plurality of layers according to Embodiment 2.1. FIG. 11A shows correspondence between an MCS field (MCS index I_{MCS}) also used in existing Rel-15/16 NR and an MCS parameter (modulation order Qm, target code rate R, spectral efficiency).

The table showing such correspondence may be referred to as an MCS table, an MCS index table, and the like. Note that the modulation order is a value corresponding to a modulation scheme. For example, the modulation orders of QPSK (Quadrature Phase Shift Keying), 16QAM (Quadrature Amplitude Modulation), 64QAM, and 256QAM may be 2, 4, 6, and 8, respectively.

Consider a case where the UE is specified with the MCS index of layer 1 = 7 by one MCS field of DCI. The UE may be specified with the MCS index of layer 2 by the MCS offset field included in the DCI. FIG. 11B shows an example of correspondence between the MCS offset field and an MCS parameter for layer 2 in this case. The MCS parameter in FIG. 11B corresponds to the MCS parameter corresponding to the MCS index = 4 to 7 in FIG. 11A. In other words, in the present example, the values of the MCS offset field = 0, 1, 2, and 3 correspond respectively to the MCS offsets -3, -2, -1, and 0.

The correspondence between the value of the MCS offset field and the MCS offset (or MCS parameter) may be specified/determined by higher layer signaling, physical layer signaling, or UE capability, or a combination of these.

It is expected that the number of bits for notification of MCSs is smaller (low overhead) for specification of MCSs for a plurality of layers using the MCS field and the MCS offset field than for specification of MCSs for a plurality of layers using two MCS fields.

### {{MCS Table}}

In FIG. 11A described above, the MCS table in which the MCS for one layer corresponds to one value of the MCS index is shown. However, an MCS table in which MCSs for a plurality of layers correspond to one value of the MCS index may be used. In this case, the UE may determine the MCSs for the plurality of layers from one MCS field, instead of using the above-described MCS offset.

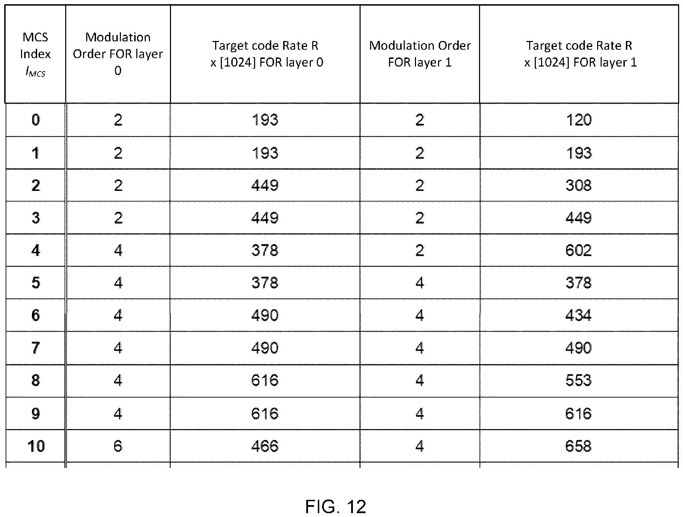

FIG. 12 is a diagram to show an example of an MCS table in which MCSs for a plurality of layers correspond to one MCS index value. In the present example, an MCS parameter for layer 0 and an MCS parameter for layer 1 are associated with each MCS index.

Note that, instead of one MCS table indicating the MCSs for the plurality of layers being referred as in FIG. 12, a plurality of MCS tables indicating MCSs of respective separate layers may be referred. For example, when two-layer transmission is scheduled, the UE may determine an MCS for layer 0, based on the MCS field and a first table (MCS table for an MCS parameter for layer 0) and may determine an MCS for layer 1, based on the same MCS field and a second table (MCS table for an MCS parameter for layer 1).

The UE may determine an MCS table to refer, based on the number of layers of a PUSCH to transmit.

Note that the UE may refer to the same (common) MCS table per layer to determine an MCS parameter per layer or may refer to a different MCS table per layer to determine an MCS parameter per layer, for one of or both a case of judging an MCS for one layer per MCS field and a case of judging MCSs for a plurality of layers per MCS field.

The MCS table referred for a certain layer may be defined in a specification in advance or may be specified/determined by higher layer signaling, physical layer signaling, or UE capability, or a combination of these. For example, an RRC parameter for specifying an MCS table to be referred may be configured for each layer.

### {{TBS} }

Calculation of a total TBS received by using a plurality of layers in the second embodiment will be described.

In an existing Rel-15/16 NR standard, the UE calculates a TBS for a PUSCH, based on steps S101 to S103 below.

In step S101, the UE determines the total number (N_{RE}) of resource elements (REs) allocated to the PUSCH in a slot, based on the number (N'_{RE}) of REs allocated to a PUSCH in one physical resource block (PRB).

In step S102, the UE determines an unquantized intermediate variable (N_{info}). Specifically, N_{info} may be obtained according to N_{info} = N_{RE} · R · Qm · ν. Here, R and Qm are respectively a target code rate and a modulation order determined based on the MCS field (MCS index (I_{MCS})) of DCI and an MCS table. ν is the number of layers of a PDSCH.

In step S103, the UE determines a TBS, based on N_{info} described above. Note that an intermediate variable (N'_{info}) quantized by a different method according to the value of N_{info} (for example, whether N_{info} is a threshold (= 3824) or smaller) may be derived to determine the TBS, based on the N'_{info}.

Meanwhile, for calculation of a total TBS received by using the plurality of layers in the second embodiment, steps obtained by modifying at least one of steps S101 to S103 described above may be used.

For example, in step S102, N_{info} may be obtained according to N_{info} = Σ^{ν}_{i = 1} (N_{RE} · Rᵢ · Qmᵢ). Here, Rᵢ and Qmᵢ may respectively be a target code rate and a modulation order for layer i. Σ^{ν}_{i = 1} (N_{RE} · Rᵢ · Qmᵢ) may mean a total sum of N_{RE} · Rᵢ · Qmᵢ from i = 1 to i = v. In this case, the TBS determined in step S103, based on this N_{info} is a result taking into account of the MCS per layer.

For example, N_{info,i} for layer i may be obtained according to N_{info,i} = N_{RE} · Rᵢ · Qmᵢ in step S102, and TBSᵢ being a TBS of layer i is determined based on N_{info,i} and the total TBS of all the layers may be determined according to TBS = Σ^{ν}_{i = 1} TBSᵢ in step S103 as in an existing method. This TBS is a result taking into account of the MCS per layer. Note that, when a quantized intermediate variable (N'_{info,i}) for layer i is derived based on N_{info,i} and a TBS is determined based on N'_{info, i}, a method of determining N'_{info,i} (and TBSᵢ) described above may be judged based on a threshold of a value different from the threshold (= 3824) used for the judgment of the method of determining N'_{info} (and TBS) described above. This threshold may be a different value per layer i (threshold ᵢ). Each threshold ᵢ may be defined in a specification in advance or specified/determined by higher layer signaling, physical layer signaling, or UE capability, or a combination of these.

Note that, when a total number of REs allocated to a PUSCH in a slot per layer is expressed as N_{RE,i} in these modified steps, N_{RE} described above may be interpreted as N_{RE,i}.

Note that, for example, the UE may determine a modulation order (Qm₁) and a target code rate (R₁) for layer 1, based on the MCS index for layer 1 (for example, given by the first MCS field) and may determine a modulation order (Qm₂) and a target code rate (R₂) for layer 2, based on the MCS index for layer 2 (which may be given by the second MCS field or by the first MCS field and the MCS offset field, for example).

### {Embodiment 2.2}

The UE may determine an MCS per layer, based on an RRC parameter.

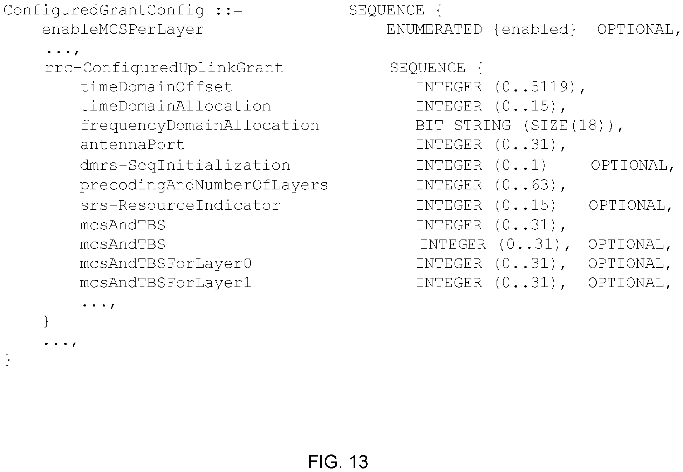

FIG. 13 is a diagram to show an example of an RRC information element / parameter for configuring an MCS per layer according to Embodiment 2.2. The present example is similar to FIG. 7, and description is not repeated for similar respects to those in FIG. 7.

For example, enableMCSPerLayer may be a parameter that enables MCS control per layer (when it is enabled, this indicates being possible to perform).

The UE may determine an MCS per layer of a configured grant PUSCH by using a value given by mcsAndTBS in RRC configured UL grant (rrc-ConfiguredUplinkGrant) instead of the MCS field of DCI.

The UE may determine MCSs of layer 0 and layer 1 of a configured grant PUSCH by using respective values given by mcsAndTBSForLayer0 and mcsAndTBSForLayer1 in RRC configured UL grant (rrc-ConfiguredUplinkGrant) instead of the first MCS field and the second MCS field of DCI in Embodiment 2.1.

Note that, when at least one of mcsAndTBS, mcsAndTBSForLayer0, and mcsAndTBSForLayer1 is configured, the UE may derive a TBS per layer, based on the MCS per layer for a configured grant PUSCH.

Note that the configuration of the RRC parameter related to an MCS per layer as that in FIG. 13 is not limited to ConfiguredGrantConfig but may be configured in PUSCH configuration information (PUSCH-Config information element), for example. In this case, the UE may judge each parameter described above as a parameter for PUSCH control, and, for example, the UE may judge an MCS per layer for dynamic PUSCH scheduled by DCI, based on an RRC parameter related to the MCS per layer included in PUSCH configuration information.

### {Variation of Second Embodiment}

A plurality of MCSs applied to a plurality of respective layers may be assumed to have no restriction (any combination may be used, for example, a combination of any different modulation orders may be applied between layers) or may be assumed to have a restriction. For example, there may be a restriction that the modulation order applied to the first layer is the same as the modulation order applied to the second layer or the difference between these orders is equal to or smaller than a threshold (for example, 2). There may be a restriction that the target code rate applied to the first layer is the same as the target code rate applied to the second layer or the difference between these is equal to or smaller than a threshold (for example, 200).

Such a restriction may be defined in a specification in advance or specified/determined by higher layer signaling, physical layer signaling, or UE capability, or a combination of these.

According to the second embodiment described above, it is possible to appropriately perform MCS control per layer.

### <Other Variations of First Embodiment and Second Embodiment>

### {Power and MCS Control per Layer}

The power control per layer based on the first embodiment and the MCS control per layer based on the second embodiment may be performed simultaneously. In this case, control of both a power ratio and an MCS per layer may be performed based on a specific field of DCI.

The specific field may be a field defined in existing DCI, such as a precoding field, an SRI field, or an MCS field, or may be a newly defined field.

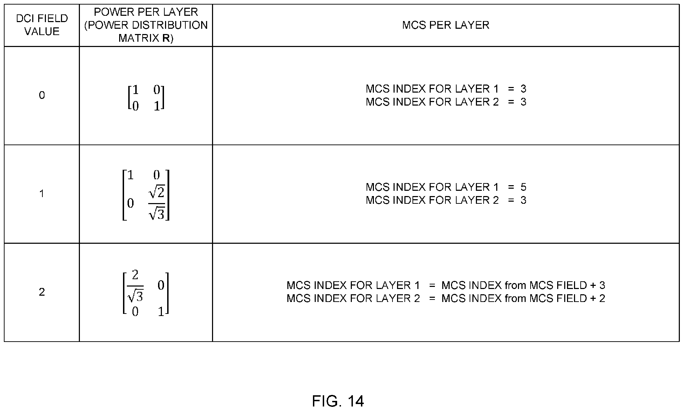

FIG. 14 is a diagram to show an example of determination of a power ratio and an MCS per layer based on the specific field in variations of the first embodiment and the second embodiment.

In the present example, a power (power distribution matrix R) per layer and an MCS index per layer are associated with a value of the specific field (DCI field). Correspondence of the value of the specific field, R, and the MCS index (or an MCS parameter) may be defined in a specification in advance or specified/determined by higher layer signaling, physical layer signaling, or UE capability, or a combination of these.

Note that the MCS per layer may be associated with a value of this DCI field as shown in the DCI field value = 0 or 1 in FIG. 14 or may be associated with a value of this DCI field and a value of another field (for example, the MCS field) as shown in the DCI field value = 2 in FIG. 14. In the example of the DCI field value = 2 in FIG. 14, the MCS index for layer 1 and the MCS index for layer 2 are determined by adding respective different values (3 and 2) to the MCS index obtained from the MCS field.

Note that a first value (for example, 0) of the specific field may indicate that neither the power control nor the MCS control per layer is performed. The UE specified with this value may perform the power control and the MCS control on PUSCH transmission commonly for layers as in Rel-15/16 NR.

A second value (for example, 1) of the specific field may indicate that the MCS control per layer is performed without performing the power control per layer. A third value (for example, 2) of the specific field may indicate that the power control per layer is performed without performing the MCS control per layer.

### {Power/MCS Control per TRP in MTRP PUSCH}

Power/MCS control per layer in the first and second embodiments may be applied to power/MCS control per TRP in PUSCHs for a plurality of transmission/reception points (TRPs) (multi TRP (MTRP)) (MTRP PUSCHs).

For future radio systems (for example, NR of Rel. 17 or later versions), it is studied to indicate a plurality of (for example, two) SRI/TPMIs by using single DCI for performing PUSCH repetition transmission by a plurality of TRPs (MTRP PUSCH repetition). Such operation may be referred to as single-DCI (s-DCI) based multi TRP operation.

When single DCI (sDCI) indicates a plurality of SRIs/TPMIs, option 1 or option 2 below is conceivable:
- option 1: SRIs/TPMIs (values) for a plurality of (for example, two) TRPs are indicated by using a field indicating a plurality of (for example, two) SRIs/TPMIs, and
- option 2: a field indicating one SRI/TPMI is indicated, and the field indicating the SRI/TPMI is configured with codepoints corresponding to a plurality of (for example, two) SRI/TPMI values.

In option 1, each of the codepoints of the plurality of respective SRI/TPMI fields may correspond to one TPMI value. Correspondence (association) between an SRI/TPMI field and an SRI/TPMI value may be defined in a specification in advance. The correspondence (association) between an SRI/TPMI field and an SRI/TPMI value may use correspondence defined in Rel. 16 or previous versions or may be correspondence defined in Rel. 17 or later versions. Correspondence between an SRI/TPMI field and an SRI/TPMI value may be different for every plurality of SRI/TPMI fields.

In option 2, a codepoint indicating one SRI/TPMI field may correspond to a plurality of (for example two) SRI/TPMI values. Correspondence (association) between an SRI/TPMI field and an SRI/TPMI value may be defined in a specification in advance or may be notified/configured/activated by RRC signaling / MAC CE.

When sDCI specifies a plurality of RSs (for example, SRSs) (in other words, specifies a plurality of SRIs), the UE may apply a different transmission power / MCS for PUSCH transmission corresponding to each of the specified RSs.

For example, when sDCI detected by the UE includes a plurality of SRI fields, the UE transmits a plurality of PUSCHs using SRS ports corresponding to SRS resources specified by these fields. In this case, the UE may apply a different power/MCS for each PUSCH to transmit the plurality of PUSCHs.

This control may be achieved by an embodiment obtained by interpreting the "layer" in the first embodiment / second embodiment described above as at least one of a "TRP," an "RS (for example, an SRS)," "PUSCH transmission corresponding to an RS," a "PUSCH," a "group constituted of PUSCH transmission(s) corresponding to one or more RSs (group including PUSCH transmission(s) corresponding to one or more RSs), and the like. For example, a power ratio per layer may be applied to each PUSCH instead of a precoding matrix for one PUSCH being multiplied by the power ratio.

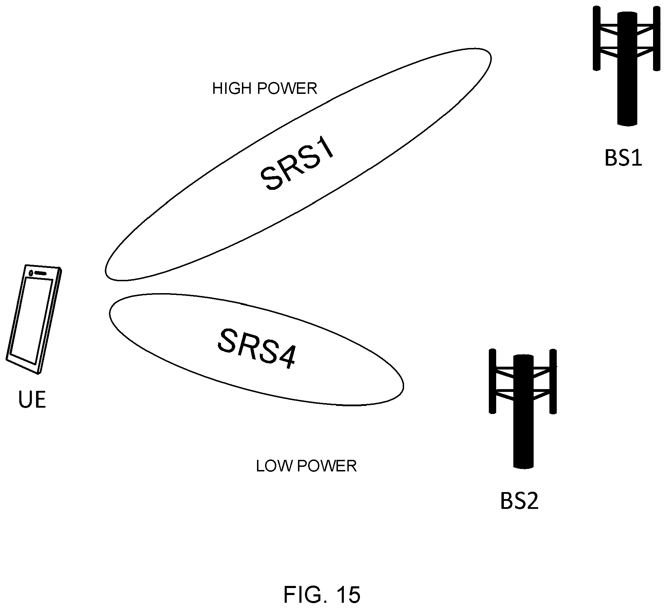

FIG. 15 is a diagram to show an example of power control per PUSCH for an MTRP PUSCH based on another variation of the first embodiment. For example, assume a case where the UE is notified, by BS1, of sDCI for scheduling an MTRP PUSCH including a first SRI field indicating SRS1, a second SRI field indicating SRS4, and information indicating a power ratio per PUSCH.

In this case, the UE may apply, for transmission, a high power to SRS1 (and a PUSCH corresponding to SRS1) (for BS1) while applying a low power to SRS4 (and a PUSCH corresponding to SRS4) (for BS2) as shown in FIG. 15.

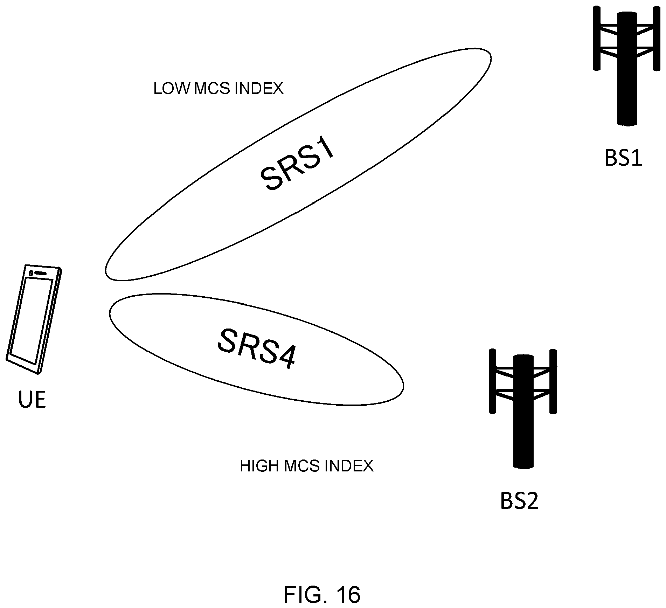

FIG. 16 is a diagram to show an example of MCS control per PUSCH for MTRP PUSCHs based on another variation of the second embodiment. For example, assume a case where the UE is notified, by BS1, of sDCI for scheduling an MTRP PUSCH including a first SRI field indicating SRS1, a second SRI field indicating SRS4, and information indicating an MCS per PUSCH.

In this case, the UE may apply, for transmission, a low MCS index to SRS1 (and a PUSCH corresponding to SRS1) (for BS1) while applying a high MCS index to SRS4 (and a PUSCH corresponding to SRS4) (for BS2) as shown in FIG. 16.

### <Third Embodiment>

A third embodiment relates to MCS control of a PDSCH per layer.

In the third embodiment, the UE may apply a different MCS for each layer (DMRS port) per codeword to receive a PDSCH. Note that, when the UE applies a different MCS for each layer, the UE may calculate the size of a transport block received on the PDSCH by using these different MCSs (Transport Block Size (TBS)). For example, the UE may calculate, per layer, a TBS for the layer by using the corresponding MCS. In this case, the total of the TBSs received by using a plurality of layers may be obtained by the sum of the TBSs of the respective layers.

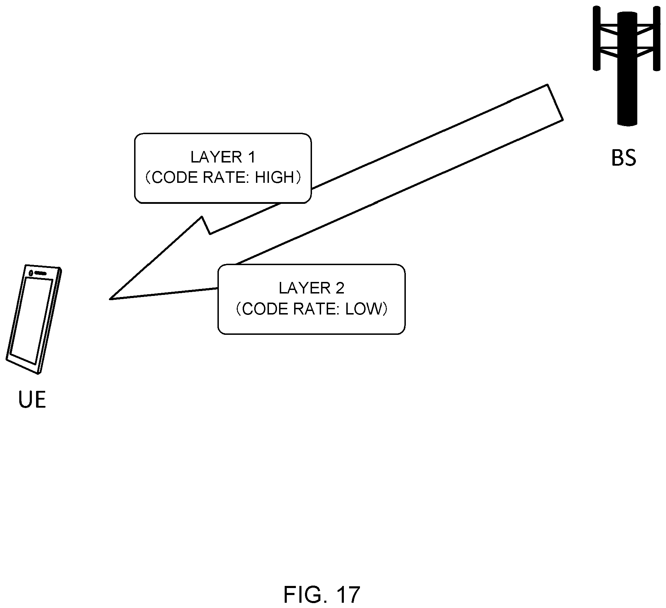

FIG. 17 shows a conceptual diagram of the third embodiment. As described above, the UE applies the same MCS between layers in Rel-15/16 NR. However, in the third embodiment, the UE can receive layer 1, based on an MCS with a high code rate and can receive layer 2, based on an MCS with a low code rate as shown in the drawing.

The third embodiment may be achieved as an embodiment obtained by the second embodiment described above with change of wording as appropriate. For example, the third embodiment may correspond to an embodiment obtained by respectively interpreting a "PUSCH," a "(PUSCH) transmission," and a "layer" in the second embodiment as a "PDSCH," "(PDSCH) reception," and a "(PDSCH) DMRS port." Note that a configured grant configuration and PUSCH configuration information may be interpreted as PDSCH configuration information (PDSCH-Config information element). DCI for scheduling a PUSCH (DCI for UL) may be interpreted as DCI format 0_0/0_1/0_2 and the like while DCI for scheduling a PDSCH may be interpreted as DCI format 1_0/1_1/1_{_}2 and the like.

According to the third embodiment described above, it is possible to appropriately perform MCS control per layer / DMRS port.

### <Fourth Embodiment>

A fourth embodiment relates to a report related to a parameter per layer (for example, a channel state information (CSI) report).

In NR, the UE uses a reference signal (or a resource for the reference signal) to measure a channel state and feeds back (report) CSI to a network (for example, a base station).

The UE may use at least one of a channel state information reference signal (CSI-RS), a synchronization signal / broadcast channel (Synchronization Signal / Physical Broadcast Channel (SS/PBCH)) block, a synchronization signal (SS), a demodulation reference signal (DMRS), and the like, to measure a channel state.

A CSI-RS resource may include at least one of a non-zero power (NZP) CSI-RS resource, a zero power (ZP) CSI-RS resource, and a CSI interference measurement (CSI-IM) resource.

A resource for measuring a signal component for CSI may be referred to as a signal measurement resource (SMR) and a channel measurement resource (CMR). The SMR (CMR) may include, for example, the NZP CSI-RS resource, SSB, and the like for channel measurement.

A resource for measuring an interference component for CSI may be referred to as an interference measurement resource (IMR). The IMR may include, for example, at least one of an NZP CSI-RS resource, an SSB, a ZP CSI-RS resource, and a CSI-IM resource, for interference measurement.

The SS/PBCH block is a block including a synchronization signal (for example, a primary synchronization signal (PSS)), a secondary synchronization signal (SSS), and a PBCH (and a corresponding DMRS), and may be referred to as an SS block (SSB) or the like.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1) (Layer 1 Reference Signal Received Power), L1-RSRQ (Reference Signal Received Quality), an L1-SINR (Signal to Interference plus Noise Ratio), an L1-SNR (Signal to Noise Ratio), and the like.

The UE may report information related to an appropriate power ratio (for example, a preferable power ratio) per layer to a network (for example, the base station).

For example, the UE may include information indicating a power ratio between layers (for example, uplink control information (UCI)) in a CSI report and report the CSI report to the base station. A UCI indicating the (appropriate) power ratio between layers may be referred to as a Power Ratio Indicator (PRI) and the like, for example. The PRI may be an index associated with the power ratio between layers.

The UE may be able to transmit CSI (UCI) including a PRI in one of a PUCCH and a PUSCH or may be able to transmit the CSI (UCI) only in a PUSCH.

Note that both the appropriate power ratio and a CQI to be described below may be notified by using one parameter (certain index) of UCI. The correspondence between the value of this index and a power ratio and a CQI (or an MCS) may be specified/determined by higher layer signaling, physical layer signaling, or UE capability, or a combination of these.

Note that, instead of the appropriate power ratio or together with the appropriate power ratio, an appropriate MCS per layer may be reported by using a CSI report.

The UE may report the CSI report including CQI per layer, to the base station. This CSI report may include a CQI for each of the plurality of layers (plurality of CQI indices) or may include the CQI of a certain layer and a differential CQI of the CQI of another layer from the CQI. The differential CQI may be the number of bits smaller than that of a normal CQI.

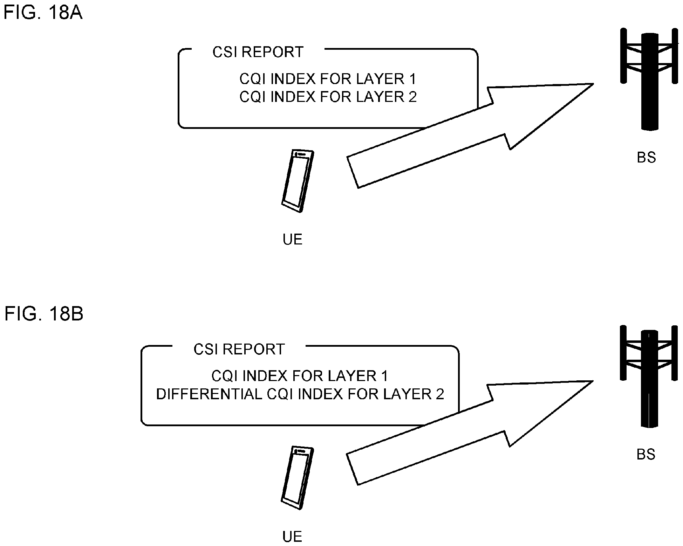

FIGS. 18A and 18B are diagrams to show examples of a CSI report including a CQI per layer in the fourth embodiment.

FIG. 18A shows an example in which the UE reports a CSI report including a (normal) CQI index for layer 1 and a (normal) CQI index for layer 2, to the base station (BS).

FIG. 18B shows an example in which the UE reports a CSI report including a (normal) CQI index for layer 1 and a differential CQI index indicating a difference for layer 2 from the CQI index for layer 1, to the base station (BS).

When, based on the CQI index of one layer, the CQI index of another layer is determined, the CQI index of such another layer may be obtained by the CQI index of such another layer = CQI index of the one layer + CQI offset. The CQI offset may be interpreted as a CQI index offset, a differential CQI index, and the like, and vice versa. The CQI offset may be an integer and may take a negative value.

The CQI index of one layer may indicate the CQI index of the layer with the lowest index (for example, layer 1) or the layer with the highest index (for example, layer of the highest rank).

The CQI offset may be defined in a specification in advance or may be specified/determined by higher layer signaling, physical layer signaling, or UE capability, or a combination of these. The number of bits of the CQI offset field included in the CSI report may be judged based on at least one of the number of layers, a higher layer parameter, and the like.

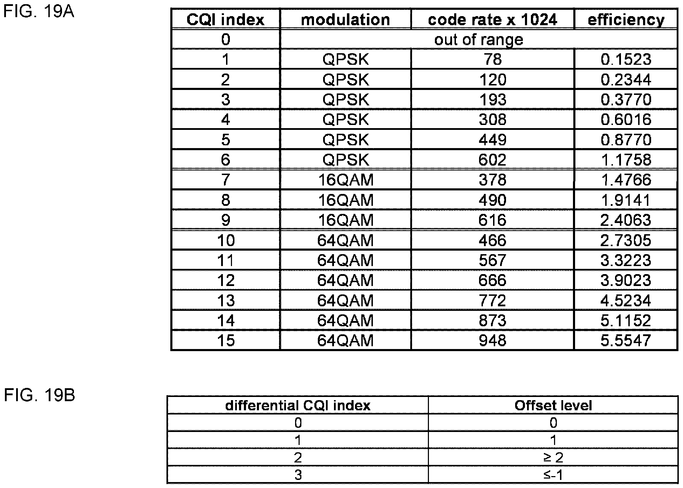

FIGS. 19A and 19B are diagrams to show examples of determination of MCSs for the plurality of layers according to Embodiment 2.1. FIG. 19A shows correspondence between a CQI index and a CQI parameter (modulation scheme, code rate, spectrum efficiency) also used in existing Rel-15/16 NR.

The table showing such correspondence may be referred to as a CQI table, a CQI index table, and the like.

Consider a case where the UE notifies CQI index = 7 in FIG. 19A as the CQI index of layer 1 of a CSI report. FIG. 19B is a diagram to show an example of correspondence of the level of a CQI offset that can be notified by a differential CQI index included in the CSI report. The level may mean how much distance a CQI index to be indicated has from a CQI index as a reference. In the present example. The CQI index = 6 to 9 in FIG. 19A may be indicated by the differential CQI index in FIG. 19B. In other words, in the present example, the values of the differential CQI index = 0, 1, 2, and 3 correspond respectively to the CQI indices = 7, 8, 9, and 6 in FIG. 19A.

The correspondence between the value of the differential CQI index and a CQI offset (or an indicated CQI index) may be specified/determined by higher layer signaling, physical layer signaling, or UE capability, or a combination of these.

It is expected that a CQI report of a plurality of layers using a CQI index field and a differential CQI index field is reported with a smaller number of bits (low overhead) than a CQI report of a plurality of layers using two CQI index fields.

When at least one of the following is satisfied, the UE may report a CQI per PRI/layer to the network:
- a report is configured by an RRC parameter (for example, an RRC parameter "reportQuantity" in a CSI report configuration (CSI-ReportConfig information element) specifies a PRI report) and
- a different MCS per layer is applied to a received PDSCH (for example, at least one of conditions 2-1 to 2-5 with interpretation about a PDSCH in the third embodiment is satisfied).

Note that the bit width of a PRI (CSI) may be determined (may vary) based on the number of layers for which a PRI/CQI report is needed (target for report).

### {{CQI Table}}

In FIG. 19A described above, the CQI table in which the CQI for one layer corresponds to one value of the CQI index (CQI field) is shown. However, a CQI table in which CQIs for a plurality of layers correspond to one value of the CQI index may be used. In this case, the UE may determine the CQIs for the plurality of layers from one CQI field, instead of using the above-described CQI offset.

Note that one CQI table showing CQIs of the plurality of layers may be referred, or a plurality of CQI tables indicating CQIs of respective separate layers may be referred. For example, when two-layer PDSCH/CSI-RS reception is scheduled, the UE may determine a CQI for layer 0, based on the CQI field and a first table (CQI table for a CQI parameter for layer 0) and may determine a CQI for layer 1, based on the same MCS field and a second table (CQI table for a CQI parameter for layer 1).

The UE may determine a CQI table to refer, based on the number of layers of a PDSCH/CSI-RS to receive.

Note that the UE may refer to the same (common) CQI table for each layer (for example, a cqi-table parameter in a CSI report configuration (CSI-ReportConfig information element)) to determine a CQI parameter per layer or may refer to a different CQI table per layer to determine a CQI parameter per layer, for one of or both a case of judging a CQI for one layer per CQI field and a case of judging CQIs for a plurality of layers per CQI field.

The CQI table referred for a certain layer may be defined in a specification in advance or may be specified/determined by higher layer signaling, physical layer signaling, or UE capability, or a combination of these. For example, an RRC parameter for specifying a CQI table to be referred may be configured for each layer.

According to the fourth embodiment described above, it is possible to appropriately transmit a CSI report including information per layer.

### <Another Variation of Third Embodiment>

### {MCS Control per TRP in MTRP PDSCH}

MCS control per layer in the third embodiment may be applied to MCS control per TRP in PDSCHs from MTRP (MTRP PDSCHs).

For NR, it is studied to indicate, to the UE, a plurality of (for example, two) TCI states by using single DCI for performing MTRP PDSCH repetition. Such operation may be referred to as single-DCI (s-DCI) based multi TRP operation.

When sDCI specifies a plurality of RSs (for example, an RS having a plurality of quasi-co-location (QCL) relationships, a plurality of RSs having QCL type D with separate channels/signals) (in other words, specifies TCI fields indicating a plurality of different TCI states), the UE may apply a different MCS for PDSCH transmission (reception) corresponding to each of the specified RSs.

For example, when a TCI codepoint of sDCI detected by the UE indicates a plurality of TCI states (activated by a MAC CE), the UE applies different MCSs to respective PDSCHs corresponding to the TCI states to perform reception processing.

This control may be achieved by an embodiment obtained by interpreting a "layer" in the third embodiment described above as at least one of a "TRP," an "RS (for example, a reference RS corresponding to a TCI state)," "PDSCH transmission/reception corresponding to an RS," a "PDSCH," a "group constituted of PDSCH transmission(s)/reception(s) corresponding to one or more RSs (group including PDSCH transmission(s)/reception(s) corresponding to one or more RSs), and the like.

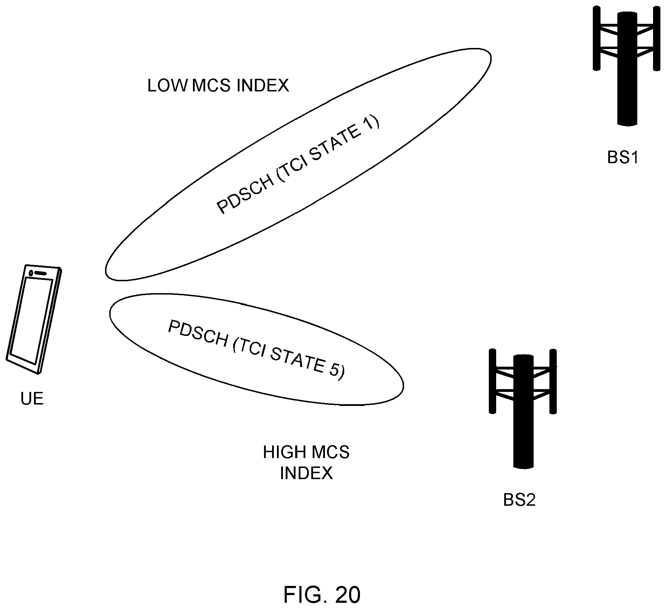

FIG. 20 is a diagram to show an example of MCS control per PDSCH for MTRP PDSCHs based on another variation of the third embodiment. For example, assume a case where the UE is notified, by BS1, of sDCI for scheduling an MTRP PDSCH including a TCI field indicating TCI state 1 and TCI state 5 and information indicating an MCS per PDSCH.

In this case, the UE may apply, for reception, a low MCS index to a PDSCH corresponding to TCI state 1 (for BS1) while applying a high MCS index to a PDSCH corresponding to TCI state 5 (for BS2), as shown in FIG. 20.

### <Others>

Note that at least one of the above-described embodiments may be applied only to a UE that has reported specific UE capability or that supports the specific UE capability.

The specific UE capability may indicate at least one of the following:
- whether to support power control of a PUSCH per layer/port/TRP,
- whether to support MCS control of a PUSCH per layer/port/TRP,
- whether to support MCS control of a PDSCH per layer/port/TRP, and
- whether to support CSI (UCI) reporting per layer/port/TRP.

Note that the specific UE capability may be capability for a CB based PUSCH, capability for an NCB based PUSCH, or capability not distinguishing these.

The specific UE capability may be capability applied over all the frequencies (commonly irrespective of frequency), capability per frequency (for example, a cell, a band, a BWP), capability per frequency range (for example, FR1, FR2), or capability per subcarrier spacing.

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when the UE is configured with specific information related to the above-described embodiment by higher layer signaling (when it is not configured, Rel-15/16 operation is applied, for example). For example, the specific information may be information indicating that power/MCS control of a PUSCH/PDSCH per layer/port/TRP is enabled, any RRC parameter for a specific resource (for example, Rel. 18), or the like. The UE may be configured with which embodiment/case/condition among those described above is to be used for PHR control, by using a higher layer parameter

A "layer" in the present disclosure may be interpreted as at least one of a "TRP," an "RS (for example, an SRS, a reference RS corresponding to a TCI state)," "PUSCH transmission corresponding to an RS," "PDSCH transmission/reception corresponding to an RS," a "PUSCH," a "PDSCH," a "group constituted of PUSCH transmission(s) corresponding to one or more RSs (group including PUSCH transmission(s) corresponding to one or more RSs)," a "group constituted of PDSCH transmission(s)/reception(s) corresponding to one or more RSs (group including PDSCH transmission(s)/reception(s) corresponding to one or more RSs)," and the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

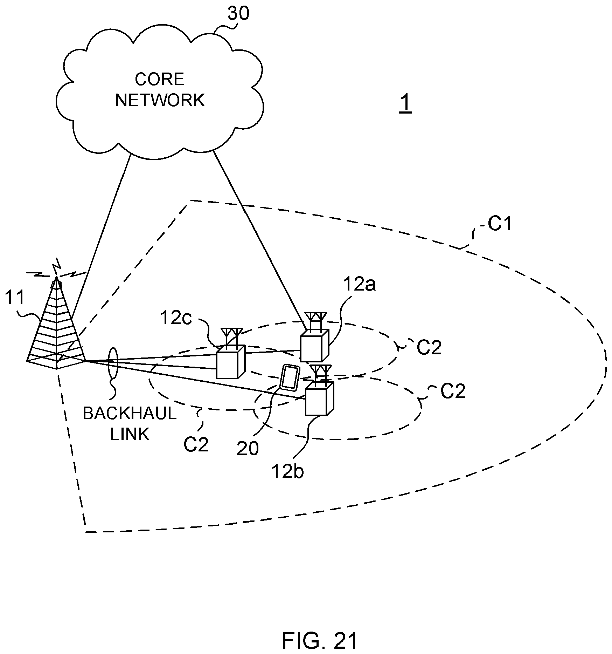

FIG. 21 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multicarrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

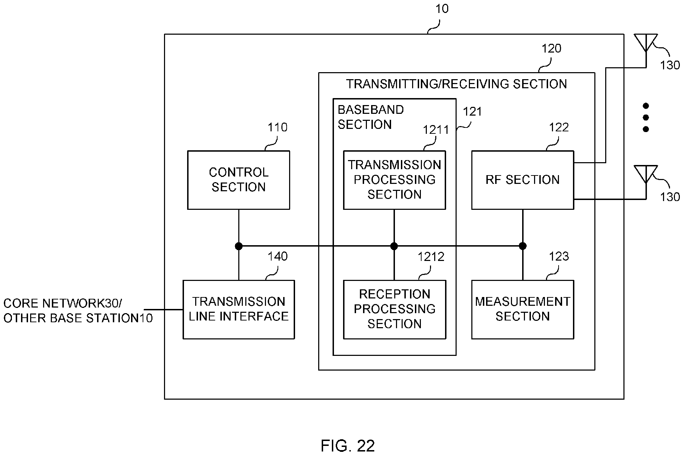

FIG. 22 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit information for applying different modulation and coding schemes (MCSs) to a plurality of layers (for example, DCI, RRC parameter), to the user terminal 20.

The transmitting/receiving section 120 may receive uplink shared channels (PUSCHs) of the plurality of layers transmitted by the user terminal 20 with application of the different MCSs, based on the information.

The transmitting/receiving section 120 may transmit information for determining different modulation and coding schemes (MCSs) to the plurality of layers (for example, DCI, RRC parameter), to the user terminal 20.

The control section 110 may apply the different MCSs to perform control for transmitting downlink shared channels (PDSCHs) of the plurality of layers.

The transmitting/receiving section 120 may transmit information for applying different power ratios to a plurality of layers (for example, DCI, RRC parameter), to the user terminal 20.

The transmitting/receiving section 120 may receive uplink shared channels (PUSCHs) of the plurality of layers transmitted by the user terminal 20 with application of the different power ratios, based on the information.

The transmitting/receiving section 120 may transmit information indicating that channel state information (CSI) report including information per layer is generated (for example, DCI, RRC parameter), to the user terminal 20.

The transmitting/receiving section 120 may receive the CSI report from the user terminal 20.

### (User Terminal)

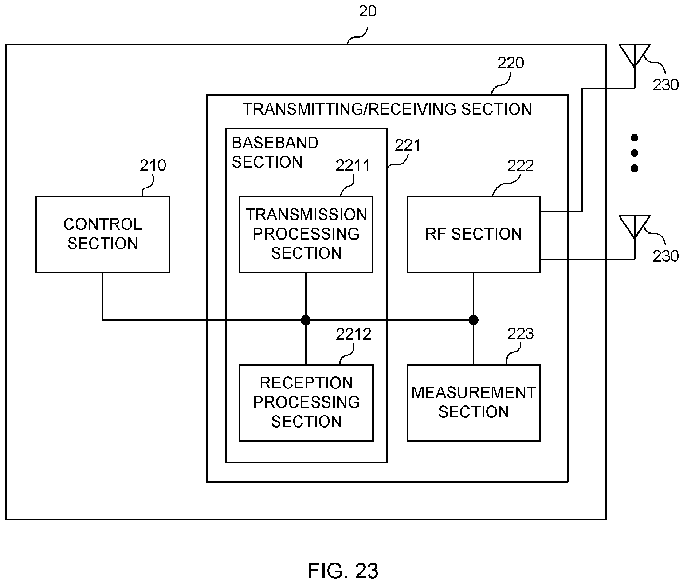

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoder. The transmitting/receiving section 220 (transmission processing section 2211) may perform, for a certain channel (for example, PUSCH), the DFT processing as the above-described transmission processing to transmit the channel by using a DFT-s-OFDM waveform if transform precoder is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may perform control for applying different modulation and coding schemes (MCSs) to a plurality of layers. The transmitting/receiving section 220 may transmit uplink shared channels (PUSCHs) of the plurality of layers with application of the different MCSs.

The control section 210 may determine each of the different MCSs, based on two MCS fields included in downlink control information (DCI).

The control section 210 may determine the different MCSs, based on one MCS field included in the downlink control information.

The control section 210 may perform control for determining different modulation and coding schemes (MCSs) for a plurality of layers. The transmitting/receiving section 220 may receive downlink shared channels (PDSCHs) of the plurality of layers with application of the different MCSs.

The control section 210 may determine each of the different MCSs, based on two MCS fields included in the downlink control information (DCI).

The control section 210 may determine the different MCSs, based on one MCS field included in the downlink control information.

The control section 210 may perform control for applying different power ratios to a plurality of layers. The transmitting/receiving section 220 may transmit uplink shared channels (PDSCHs) of the plurality of layers with application of the different power ratios.

The control section 210 may determine the different power ratios, based on a precoding information and number of layer field included in the downlink control information.

The control section 210 may determine the different power ratios, based on a transmitted precoding matrix indicator (TPMI) indicated by the downlink control information.

The control section 210 may generate (derive) a channel state information (CSI) report including information per layer. The transmitting/receiving section 220 may transmit the CSI report.

The control section 210 may generate the CSI report including information related to an appropriate power ratio per layer.

The control section 210 may generate the CSI report including a channel quality indicator (CQI) index per layer.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (separate apparatus), for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

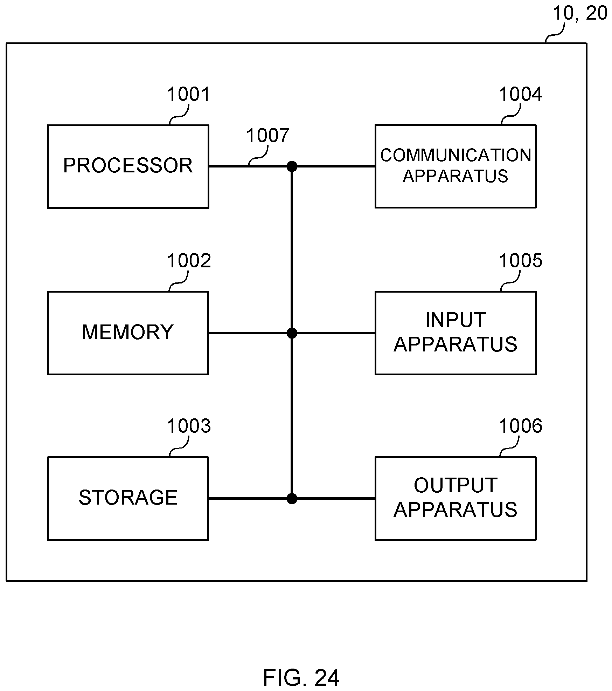

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that performs control to determine different modulation and coding schemes (MCSs) for a plurality of layers; and
a receiving section that applies the different MCSs to receive downlink shared channels of the plurality of layers.

2. The terminal according to claim 1, wherein
the control section determines each of the different MCSs, based on two MCS fields included in downlink control information.

3. The terminal according to claim 1, wherein
the control section determines the different MCSs, based on one MCS field included in downlink control information.

4. A radio communication method for a terminal, the radio communication method comprising:
performing control to determine different modulation and coding schemes (MCSs) for a plurality of layers; and
applying the different MCSs to receive downlink shared channels of the plurality of layers.

5. A base station comprising:
a transmitting section that transmits information for determining different modulation and coding schemes (MCSs) for a plurality of layers; and
a control section that performs control to apply the different MCSs to transmit downlink shared channels of the plurality of layers.
